# EUROPÄISCHE PATENTSCHRIFT

(11) **EP 3 981 576 B1**
(45) Veröffentlichungstag und Bekanntmachung des Hinweises auf die Patenterteilung: **26.07.2023**
(21) Anmeldenummer: 21201273.6
(22) Anmeldetag: 06.10.2021
(51) Int. Cl.: B29C 53/38, E06B 1/62

(54) **VERFAHREN ZUR HERSTELLUNG EINES FOLIENBANDES UND FOLIENBAND**
FILM STRIP AND METHOD FOR PRODUCING A FILM STRIP
PROCÉDÉ DE FABRICATION D'UNE BANDE DE FEUILLE ET BANDE DE FEUILLE

(30) Priorität: 06.10.2020 DE 102020126123
(43) Veröffentlichungstag der Anmeldung: 13.04.2022
(73) Patentinhaber: SwissChem AG, 9464 Rüthi (CH)
(72) Erfinder: Gerlinger, Eckhart, Rüthi (CH)
(74) Vertreter: HGF

(56) Entgegenhaltungen:
- EP-B1- 2 058 466
- WO-A1-99/48618
- DE-B3- 10 337 880

## Beschreibung

Die Erfindung betrifft ein Verfahren zur Herstellung eines Folienbandes und ein solches Folienband.

Folienbänder, welche auch als Fugenbänder bezeichnet werden können, dienen zum Abdichten von Fugen zwischen Bauelementen, die miteinander gefügt werden. Bei den Bauelementen kann es sich um Bauelemente des Hausbaus, bei den Fugen beispielsweise um Fugen zwischen einem Mauerwerk und einer Tür- oder Fensterzarge handeln. Das Folienband umfasst eine Funktionsmembran, ein Vlies, das mit einer Oberseite oder Unterseite der Membran bevorzugt vollflächig verbunden ist, zumindest bereichsweise eine Klebeschicht, die auf der dem Vlies abgewandten Seite der Membran zumindest bereichsweise aufgebracht ist.

Folienbänder zum Abdichten von Fugen zwischen zusammengefügten Bauteilen sind bekannt. Insbesondere beim Bau von Gebäuden werden sie eingesetzt. Bei den Fugen kann es sich beispielsweise um Fugen zwischen einem Mauerwerk und die Zarge eines Fensters oder einer Tür handeln. Die bekannten Folienbänder sind gewöhnlich aus mehreren Lagen aufgebaut, einer Membran mit einem variablen S_{dd}-Wert und wenigstens einer Klebeschicht in einem Bereich auf einer Oberseite der Membran, mit der sie mit einem der Bauteile oder mit beiden die Fuge ausbildenden Bauteilen verbunden werden können. Folienbänder werden sowohl im Außenbereich eines Gebäudes, beispielsweise zum Verbinden von Fassadenelementen oder der Außenabdichtung von Fenstern oder Türen, als auch im Innenbereich, zur Innenabdichtung von Fenstern oder Türen verwendet.

Aus der EP 2 058 466 B1 ist ein Fensteranschlussband bekannt, das dem Abdichten einer Umlauffuge zwischen einem Gebäudeöffnungsrand und einem Fensterstock oder Fensterrahmen dient. Das Fensteranschlussband umfasst zwei Zonen aus einem flächigen Material und über die Breite des Bandes wenigstens drei Klebezonen. Die drei Klebezonen dienen dazu, das Band dauerhaft mit dem Fensterstock und mit der dem Inneren des Gebäudes zugewandten Rand der Gebäudeöffnung zu verbinden. Das flächige Material der beiden Zonen wirkt abgängig von seinem Flüssigkeitsgehalt diffusionsoffen bis hoch diffusionshemmend.

Die EP 2 692 959 B1 betrifft ein weiteres Folienband zum Abdichten von Fugen zwischen zusammengefügten Bauelementen im Hausbau. Das Folienband umfasst eine Membran, die eine feuchtevariable Polymerfolie umfasst, deren Wasserdampfdiffusionskoeffizient sich in Abhängigkeit von der umgebenden Luftfeuchtigkeit ändert. Das Folienband ist in Querrichtung positiv dehnfähig.

Derartige Folienbänder weisen eine Membran auf, welche üblicherweise aus einem Polymermaterial ausgebildet ist. Derartige Membrane bzw. Folien sind dem Fachmann bekannt, wie beispielsweise aus der DE 10 2010 054 110 A1, aus der WO 9633321 A1, aus der DE 10 2008 037 292 A1 und aus der WO 2010/017947 A2.

Bekannte Fugenbänder werden für die Lagerung und den Transport in Rollenform bereitgestellt. Ein Problem ist die Handhabung der bekannten Fugenbänder bei der Montage, da beim Ankleben des Fugenbands an einem Ende, der Rest des Fugenbands herumhängt und nur schwer kontrolliert werden kann. Dies macht das genaue Positionieren des Fugenbands schwierig, was zu einem größeren Zeitaufwand bei der Montage des Fugenbands führen kann. Der größere Zeitaufwand erhöht die Kosten für den Bauherrn und schmälert den Gewinn des Ausführenden.

Es besteht daher Bedarf an einem Folien- bzw. Fugenband, das die Montage des Bands sicherer und schneller macht, als dies bei bekannten Bändern der Fall ist.

Es ist daher die Aufgabe der Erfindung ein Verfahren zur Herstellung eines Folienbands und ein Folienband bereitzustellen, das vor Ort sicher und schnell verarbeitet werden kann.

Diese Aufgabe wird durch das Verfahren zum Herstellen eines Folienbands mit den Merkmalen des Anspruchs 1 und das Folienband mit den Merkmalen von Anspruch 10 gelöst. Die von Anspruch 1 bzw. Anspruch 10 abhängigen Ansprüche offenbaren weitere Merkmale, mit der das Verfahren respektive der Gegenstand vorteilhaft weitergebildet werden kann.

Ein Aspekt der Erfindung betrifft ein Verfahren zur Herstellung eines Folienbands zur Abdichtung von Fugen zwischen zwei Bauelementen, zum Beispiel im Hausbau zwischen einem Mauerwerk und einer Fenster- oder Türzarge, mit den Schritten:
(a) Bereitstellen einer bandförmigen Membran oder Zuschneiden der Membran;
(b) Bereitstellen eines bandförmigen Textils oder Zuschneiden des Textils;
(c) Verbinden des Textils mit einer Ober- oder Unterseite der Membran;
(d) zumindest bereichsweises Auftragen einer Klebeschicht auf die vom Textil abgewandte Seite der Membran;
(e) Falten des Folienbands entlang einer Längsachse zu einem Faltkörper, sodass die Klebeschicht bereichsweise eine Außenseite des Faltkörpers an einer Oberseite und/oder einer Unterseite des Faltkörpers bildet und im Inneren des Faltkörpers zumindest bereichsweise Abschnitte des Textils aufeinanderliegen;
(f) bereichsweises Verbinden der aufeinanderliegenden Abschnitte des Textils, so dass die aufeinanderliegenden Abschnitte des Textils partiell und insbesondere punktuell verbunden sind.

Das bereichsweise Verbinden der Textilabschnitte kann bspw. durch bereichsweises Zuführen von Energie zu dem Faltkörper erfolgen, sodass die aufeinanderliegenden Abschnitte des Textils partiell und insbesondere punktuell verschweißen.

Es hat sich gezeigt, dass durch bereichsweises Zuführen von Energie die aufeinanderliegenden Abschnitte des Textils partiell und insbesondere punktuell verschweißen. Mit "bereichsweise Zuführen von Energie" ist gemeint, dass nur einem Teilbereich der aufeinanderlegenden Abschnitte Energie zugeführt wird. Hierdurch bildet sich eine Schweißverbindung aus, die die aufeinanderlegenden Abschnitte partiell verbindet.

Alternativ kann das bereichsweise Verbinden der Textilabschnitte auch durch bereichsweises Zuführen von Klebstoff, sodass die aufeinanderliegenden Abschnitte des Textils partiell und insbesondere punktuell verklebt werden.

Durch die so entstehende partielle Verbindung bzw. Schweißverbindung wird der gefaltete Zustand des Folienbandes sicher gehalten, wobei die Verbindung einfach gelöst werden kann. Hierdurch kann das so hergestellte Folienband einfach montiert werden, wie es unten näher erläutert wird.

Diese partielle Schweißverbindung ist vorzugsweise eine punktuelle Schweißverbindung mit mehreren voneinander beabstandeten Schweißpunkten. Sie kann jedoch auch eine ununterbrochene dünne Schweißnaht sein. Die punktuelle Verschweißung ist jedoch bevorzugt, wie es unten näher erläutert wird.

Das Textil kann ein Gewebe, Gewirke oder ein Vlies sein. Ist das Textil ein Vlies, dann ist ein Verbinden der Vliesabschnitte durch Verschweißen bevorzugt. Es hat sich gezeigt, dass Vliese besonders effizient und zuverlässig verschweißt werden können.

Das Maß des Textils entspricht im Wesentlichen dem Maß der Membran. Das Textil kann mit der Membran fest verbunden, beispielsweise verklebt sein. Die Membran kann nur entweder auf der Oberseite oder der Unterseite mit dem Textil bedeckt sein, oder auf der Oberseite und auf der Unterseite. Dabei kann das die Oberseite bedeckende Textil das gleiche Material sein, wie das die Unterseite bedeckende Textil. Es können aber auch unterschiedliche Textile vorgesehen sein. Als Textil- bzw. Vliesmaterial eignet sich insbesondere ein Polyethylen, Polyester, Polypropylen oder ein Polyamid. Das Vlies kann ein Nadelvlies, ein Wasserstrukturvlies, ein Spinnvlies oder ein anderes für den Zweck geeignetes Vlies oder Textil sein.

Die Klebeschicht kann eine selbstklebende Schicht sein, das heißt, ein Kleber, der seine Klebeeigenschaften bei normaler Umgebungstemperatur über eine längere Zeit, zum Beispiel Tage, Wochen oder Monate, zumindest im Wesentlichen beibehält. Solch ein Kleber kann eine Ablaufdatum haben, ab dem er nicht mehr eingesetzt werden darf. Bei der Klebeschicht kann es sich aber auch um einen Kleber handeln, dessen Klebeeigenschaften erst aktiviert werden müssen. Bevorzugt bildet der Kleber eine selbstklebende Schicht, einen selbstklebenden Bereich oder einen selbstklebenden Streifen.

Handelt es sich bei der Klebeschicht um eine selbstklebende Schicht, kann diese zumindest bereichsweise mit einer Abdeckfolie abgedeckt werden, damit die Klebeschicht vor Austrocknung oder Verschmutzung und/oder ungewolltem Festkleben des Folienbands an einem Gegenstand während der Lagerung und des Transports geschützt ist. Außerdem kann so das Abrollen des Folienbands von einer Rolle erleichtert werden.

Ein Folienband ist gewöhnlich ein streifenförmiger, flexibler Flachkörper mit einer bestimmten Länge und einer bestimmten Breite, wobei die Länge ein Vielfaches der Breite ist. Wenn das Folienband an wenigstens einer Längsseite gefaltet wird, heißt das, dass die Faltlinie im Wesentlichen parallel zu einer Mittellängslinie des Bands verläuft.

Beim Schweißen werden nur die zwei direkt aufeinanderliegenden Abschnitte des Textils verbunden. Das Material aller anderen Lagen des Faltkörpers wird eventuell beim Schweißvorgang lokal erwärmt, aber zu wenig, um eine Materialverbindung mit einer angrenzenden Lage einzugehen.

Mit der partiellen Verschweißung der aneinander anliegenden Abschnitte des Textils können kreispunktförmige, linienförmige oder kreuzförmige Schweißpunkte erhalten werden. Die Schweißpunkte sind vorzugsweise entlang einer geraden Linie in regelmäßigen Abständen angeordnet. Sie können aber auch in einem vorbestimmten oder zufällig verteilten Muster angeordnet sein. Die Verschweißung kann auch durchgehend als dünne Linie gebildet sein. Schließlich können auch zwei oder mehr Schweißpunkte quer zur Längsachse des Bands nebeneinander angeordnet sein, beispielsweise auf einer Linie oder versetzt zueinander. Ein Schweißpunkt kann rund, dreieckig, vieleckig, beispielsweise quadratisch oder vier- oder sechseckig, kreuzförmig, ringförmig, teilringförmig sein, oder eine beliebige Form aufweisen.

Ein Abstand zwischen zwei in Längsrichtung des Bands aufeinanderfolgenden Schweißpunkten kann mindestens 10 mm, bevorzugt zumindest 15 mm, und besonders bevorzugt zumindest 20 mm betragen. Der Maximale Abstand zwischen zwei aufeinanderfolgenden Schweißpunkten kann 50 mm, bevorzugt 30 mm, besonders bevorzugt 20 mm betragen. Dabei wird als Abstand die Entfernung der Mittelpunkte zweier in Längsrichtung des Bands benachbarter Schweißpunkte genommen. Auch Abstände zwischen den Schweißpunkten, die kleiner als 10 mm oder größer als 50 mm sind, sind von der Erfindung umfasst, wenn auch weniger bevorzugt. Der Abstand zwischen zwei Schweißpunkten ist vorzugsweise so gewählt, dass man einen Finger in den Bereich zwischen diesen Schweißpunkten einführen kann, um die Schweißpunkte und damit die Faltung zu lösen.

Die Energiezufuhr beim Schweißen kann über einen plattenförmigen Körper oder über eine Anordnung von Walzen erfolgen. Die Anordnung von Walzen umfasst vorzugsweise eine erste Walze und eine zweite Walze, die so parallel übereinander angeordnet sind, dass sie zwischen sich einen Walzenspalt ausbilden. Es können aber auch mehrere Walzen vorgesehen sein, die nacheinander angeordnet sind, um das Folienband entlang einer gewissen Strecke zu führen. Dies können einzelne Walzen oder mehrere Walzenpaare sein, bei denen jeweils zwei Walzen parallel übereinander angeordnet sind, sodass sie zwischen sich einen Walzenspalt ausbilden.

Bevorzugt wird der Faltkörper durch den Walzenspaltgeführt. Die erste und die zweite Walze oder wenigstens eine der Walzen kann radförmig sein, das heißt, einen Durchmesser haben, der um ein Mehrfaches größer als eine Breite in Richtung der Rotationsachse der Walze ist. Die erste und/oder die zweite Walze kann eine Vielzahl an, von der Walzenoberfläche vorstehenden Noppen, aufweisen, die den Walzenspalt im Wesentlichen überbrücken, sodass das Band in diesem Bereich beim Durchlauf durch den Walzenspalt zusammengedrückt wird. Die radial nach außen vorstehenden Noppen können in die Walzenoberfläche der ersten Walze und/oder der zweiten Walze integriert sein. Jede der Noppen kann einen punktförmigen Anregungskörper bilden, um punktuell Energie, beispielsweise Druck- oder Reibungsenergie, zum Verschweißen in das Folienband einzubringen. Die punktuelle oder sonstige Verschweißung der aufeinander liegenden Vliese bzw. Textile erfolgt im Walzenspalt.

Der oder die Anregungskörper sind bevorzugt Ultraschallsender, sodass mittels Ultraschall die aufeinanderliegenden Abschnitte des Vlieses oder Textils partiell und insbesondere punktuell miteinander verschweißt werden.

Wenigstens eine der beiden Walzen kann drehangetrieben sein, beispielsweise über einen Elektromotor, dessen Geschwindigkeit regelbar ist. Die jeweils andere Walze kann über ein Getriebe mit der Walze verbunden sein, oder einen eigenen Motor aufweisen. Wird jede der Walzen von einem separaten Motor angetrieben, können die Motoren miteinander synchronisiert sein.

Wenn die erste Walze und die zweite Walze, die beschriebenen Noppen umfassen, die so angeordnet sind, dass im Walzenspalt immer eine Noppe der ersten Walze einer Noppe der zweiten Walze direkt gegenübersteht, können die erste Walze und die zweite Walze separat drehangetrieben oder über ein Getriebe, beispielsweise ein Zahnradgetriebe, bewegungstechnisch gekoppelt sein. Mit anderen Worten werden bei dieser Konfiguration die Schweißpunkte immer dort gebildet, wo der Faltkörper mit der einen Seite mit einer der Noppen der ersten Walze und mit der gegenüberliegenden Seite mit einer der Noppen der zweiten Walze in Kontakt steht. Das heißt, die punktuelle Verschweißung der aufeinander liegenden Textile erfolgt im Walzenspalt zwischen einer Noppe oder mehreren Noppen der ersten Walze und einer Noppe oder mehreren Noppen der zweiten Walze, die sich im Walzenspalt gegenüberliegen. In diesem Fall kann eine Synchronisierung der Drehung der beiden Walzen, sei es über ein Getriebe oder die Antriebsmotoren, nötig sein.

Das punktuelle Verschweißen erfolgt bevorzugt durch Ultraschallschweißen (US). Zahlreiche Versuche haben gezeigt, dass das Schweißen mit Ultraschall sehr gute Ergebnisse erzeugt. Die Verschweißung wird mit Schwingungen, die in die Fügepartner, hier das Vlies oder Textil, eingeleitet werden, bewirkt. Das Vlies oder Textil erhitzt sich und beginnt zu schmelzen, wodurch der Dämpfungskoeffizient steigt. Die Zunahme des Dämpfungskoeffizienten führt zu einer höheren inneren Reibung, was die Temperaturerhöhung weiter beschleunigt. Der aufgeschmolzene Werkstoff des Vlieses oder Textils verbindet sich und nach dem Abkühlen und Erstarren des Werkstoffes sind die Vlies- oder Textillagen miteinander verbunden.

Das Verschweißen kann auch mit dem Hochfrequenzschweißen (HF) ausgeführt werden. Hierbei können wiederum die Schweißpunkte mit zwei Walzen erzeugt werden, wobei die Anregungskörper der einen Walze als punktförmige Elektroden ausgebildet sind, die mit einer Quelle für ein elektrisches Schweißsignal verbunden sind. Die punktförmigen Elektroden sind in die Mantelfläche einer ansonsten elektrisch isolierenden Manteloberfläche der Walze integriert. Diese Elektroden können als an der Mantelfläche vorstehende Noppen ausgebildet sein, oder sich ebenflächig in die Mantelfläche einfügen. Die Quelle kann eine Gleichstrom- oder Wechselstromquelle sein, das Signal insbesondere ein Hochfrequenzsignal. Die andere Walze kann elektrisch leitend ausgebildet sein und somit eine Gegenelektrode zu den Schweißelektroden bilden. Mit einem Hochfrequenzsignal von zumindest 10 MHz können Kunststoffe mit funktionellen polaren Gruppen sehr gut erhitzt und verschweißt werden. Für technische Anwendungen ist international die Frequenz von 27,12 MHz freigegeben.

Das Einstellen der Intensität der Verschweißung kann zum Beispiel durch Einstellen der Schweißenergie (Schwingungsamplitude) und/oder der Drehgeschwindigkeit der beiden Walzen erfolgen. Wenn sich beispielweise das Textilmaterial, der Klebstoff der Kleberschicht oder die Dicke wenigstens einer der Schichten des Faltkörpers verändert, dann kann einfach nachjustiert werden.

Das Folienband respektive der Faltkörper kann nach dem Verschweißen der Textile in einem weiteren Schritt zu einer Rolle aufgerollt werden. Die Rolle aus dem Folienband kann einfach gelagert und transportiert werden.

Ein zweiter Aspekt der Erfindung betrifft ein Folienband zum Abdichten von Fugen zwischen Bauelementen, zum Beispiel im Hausbau zwischen einem Mauerwerk und einer Fenster- oder Türzarge. Das Folienband umfasst:
(a) eine Funktionsmembran mit einer Oberseite und einer Unterseite,
(b) ein Textil, das mit der Membran an einer Oberseite oder Unterseite bevorzugt vollflächig verbunden ist,
(c) zumindest bereichsweise eine Klebeschicht, die auf die vom Textil abgewandte Seite der Membran zumindest bereichsweise angebracht ist,
(d) optional eine Abdeckfolie, die die offene Oberfläche der Klebeschicht abdeckt.

Das Folienband zeichnet sich dadurch aus, dass das Folienband zu einem Faltkörper gefaltet ist, sodass im Inneren des Faltkörpers zumindest bereichsweise Abschnitte des Textils aufeinanderliegen, wobei die aufeinanderliegenden Abschnitte des Textils partiell und insbesondere punktuell miteinander verschweißt sind.

Ein solches Folienband kann bei der Montage zunächst mit der Klebeschicht an einem ersten Baukörper befestigt werden. Durch Einführen eines Fingers zwischen die mit der Schweißverbindung verbunden Abschnitte des Folienbandes und durch Wasserdampfdiffusionskoeffizienten, der sich in Abhängigkeit von der umgebenden Luftfeuchtigkeit ändert. Die Membran kann insbesondere zumindest im Wesentlichen aus Polyethylen; Polyurethan, Polyamid, Polyethylen, Polypropylen oder PVC bestehen oder wenigstens eines dieser Materiale umfassen. Derartige Folien sind dem Fachmann bekannt und es gibt zahlreiche Patentliteratur hierzu, wie beispielsweise die DE 10 2010 054 110 A1, die WO 9633321 A1, die DE 10 2008 037 292 A1 und die WO 2010/017947 A2, auf die diesbezüglich verwiesen wird, Entlangstreichen des Fingers entlang dem Folienband löst sich die Verbindung zwischen den beiden Abschnitten. Hierdurch klappt einer der beiden Abschnitte auf und kann mit der daran befindlichen Klebeschicht mit einem zweiten Baukörper verbunden werden, der gegenüber dem ersten Baukörper abzudichten ist.

Da die zusammengefalteten Abschnitte des Folienbandes mittels der partiellen Schweißverbindung zuverlässig zusammengehalten werden und diese Faltung einfach gelöst werden kann, kann das Folienband sehr einfach in dem abzudichtenden Bereich zunächst im gefalteten Zustand montiert und danach entfaltet werden.

Die punktuelle Verschweißung erlaubt ein einfaches Lösen bzw. Aufbrechen der Schweißverbindung. Dies gilt vor allem für eine punktuelle Schweißverbindung. "Punktuelles Verschweißen" bedeutet nicht, dass die Schweißverbindung notwendigerweise als kreisförmiger Schweißpunkt ausgebildet ist, sondern dass die der überwiegende Bereich der aufeinanderliegenden Abschnitte nicht verschweißt ist, und lediglich mehrere vergleichsweise kleine Bereich der aufeinanderliegenden Abschnitte miteinander verschweißt sind.

Bei der Membran kann es sich insbesondere um eine Funktionsmembran handeln, bevorzugt um eine nicht perforierte Folie. Bei der Folie kann es sich um eine feuchtevariable Polymerfolie handeln, mit einem Wasserdampfdiffusionskoeffizienten, der sich in Abhängigkeit von der umgebenden Luftfeuchtigkeit ändert.

Die Membran kann insbesondere zumindest im Wesentlichen aus Polyethylen, Polyurethan, Polyamid, Polyethylen, Polypropylen oder PVC bestehen oder wenigstens eines dieser Materiale umfassen. Derartige Folien sind dem Fachmann bekannt und es gibt zahlreiche Patentliteratur hierzu, wie beispielsweise die DE 10 2010 054 110 A1, die WO 9633321 A1, die DE 10 2008 037 292 A1 und die WO 2010/017947 A2, auf die diesbezüglich verwiesen wird,

Die Membran weist eine Dicke von zumindest 10 µm bzw. bevorzugt zumindest 15 µm bzw. besonders bevorzugt zumindest 20 µm und eine Dicke von maximal 200 µm bzw. bevorzugt maximal 150 µm bzw. besonders bevorzugt maximal 100 µm auf.

Das Maß, insbesondere die Länge und die Breite, des Textils entsprechen im Wesentlichen dem Maß der Membran. Das Textil kann mit der Membran fest verbunden, beispielsweise verklebt sein. Die Membran kann nur entweder auf der Oberseite oder der Unterseite mit dem Textil bedeckt sein, oder auf der Oberseite und auf der Unterseite. Dabei kann das die Oberseite bedeckende Textil das gleiche Material sein, wie das die Unterseite bedeckende Textil, es kann sich aber auch um Textile aus unterschiedlichen Materialien handeln. Die Membran zusammen mit dem damit verbundenen Textil weist eine Dicke von zumindest 100 µm bzw. bevorzugt zumindest 150 µm bzw. besonders bevorzugt zumindest 250 µm und eine Dicke von maximal 500 µm bzw. bevorzugt maximal 400 µm bzw. besonders bevorzugt maximal 300 µm auf.

Die Klebeschicht kann eine selbstklebende Schicht sein, das heißt, ein Kleber, der seine Klebeeigenschaften bei normaler Umgebungstemperatur über eine längere Zeit, zum Beispiel Tage, Wochen oder Monate, zumindest im Wesentlichen beibehält. Solch ein Kleber kann eine Ablaufdatum haben, ab dem er nicht mehr eingesetzt werden darf. Bei der Klebeschicht kann es sich aber auch um einen Kleber handeln, dessen Klebeeigenschaften erst aktiviert werden müssen. Bevorzugt bildet der Kleber eine selbstklebende Schicht, einen selbstklebenden Bereich oder einen selbstklebenden Streifen. Die selbstklebende Schicht weist beispielsweise eine Dicke von zumindest 50 µm bzw. bevorzugt zumindest 100 µm bzw. besonders bevorzugt zumindest 170 µm und eine Dicke von maximal 400 µm bzw. bevorzugt maximal 300 µm bzw. besonders bevorzugt maximal 270 µm auf.

Die Klebeschicht kann mehrere separate Klebebereich des Folienbands bilden, die nicht miteinander verbunden sind. Liegt ein Klebebereich innerhalb des Faltbereichs, so ist es bevorzugt, wenn die Kante der Faltung ohne Klebstoff ist, sodass der Klebstoff bei dem gefalteten Folienband nicht seitlich vorsteht. Der Abstand zwischen benachbarten Klebebereichen insbesondere im Faltbereich beträgt mindestens 2 mm oder mindestens 3 mm bzw. bevorzugt mindestens 4 mm bzw. besonders bevorzugt mindestens 5 mm. Der Abstand zwischen benachbarten Klebebereichen insbesondere im Faltbereich beträgt höchstens 7 mm bzw. bevorzugt höchstens 6 mm bzw. besonders bevorzugt höchstens 5 mm. Für Spezialanwendungen sind Abstände zwischen benachbarten Klebebereichen, die kleiner als 2 mm oder 3 mm und größer als 7 mm sind, jedoch grundsätzlich nicht ausgeschlossen.

Eine gefaltetes Folienband, bei dem die Kante der Faltung (= Faltkante) ohne Klebstoff ausgebildet ist, kann bei der Montage in einem Eckbereich, der zwischen einem Fensterraumen und einer Mauerlaibung ausgebildet ist, kann mit seiner klebefreien Kante exakt in der Ecke diese Eckbereiches eingeführt und positioniert werden. Würde die Kante mit Klebstoff versehen sein, dann besteht die Gefahr, dass sie mit der Mauerlaibung oder mit dem Fenster in Kontakt kommt und dort haften bleibt, bevor sie vollständig in die Ecke eingeführt ist. Die klebefreie Kante erlaubt somit ein einfaches, sicheres und präzises Positionieren des Folienbandes in einem Eckbereich. Diese klebefeie Kante stellt einen selbständigen Erfindungsgedanken dar, der auch unabhängig vom punktuellen Verbinden der aufeinanderliegenden Textilabschnitte verwendet werden kann.

Handelt es sich bei der Klebeschicht um eine selbstklebende Schicht, kann diese zumindest bereichsweise mit einer Abdeckfolie abgedeckt werden, damit die Klebeschicht vor Austrocknung oder Verschmutzung und/oder ungewolltem Festkleben des Folienbands an einem Gegenstand während der Lagerung und des Transports geschützt ist. Außerdem kann so das Abrollen des Folienbands von einer Rolle erleichtert werden. Die Abdeckfolie weist eine Dicke von zumindest 40 µm bzw. bevorzugt zumindest 50 µm bzw. besonders bevorzugt zumindest 60 µm und eine Dicke von maximal 120 µm bzw. bevorzugt maximal 100 µm bzw. besonders bevorzugt maximal 80 µm auf.

Dass beim Schweißen nur zwei direkt aufeinanderliegende Textile schweißverbunden werden, bedeutet, dass das Material aller anderen Lagen des Faltkörpers eventuell lokal erwärmt wird, aber zu wenig, um eine Materialverbindung mit einer angrenzenden Lage einzugehen. Bevorzugt ist der Energieeintrag so gering, dass die Eigenschaften der Klebeschicht oder Klebeschichten im Wesentlich unverändert bleiben.

Eine Anlage, auf der das im ersten Aspekt beschriebene Verfahren durchgeführt werden kann, kann zumindest einen Rollenhalter aufweisen, der wenigstens eine Rolle mit aufgerollter Membran, die bevorzugt bereits auf eine Endbreite des Folienbands zugeschnitten ist, aufnehmen kann. Die Membran kann von Hand, halbautomatisch oder automatisch in die Anlage in eine Transporteinrichtung eingelegt werden, die die Membran durch die Anlage bewegt.

Auf dem Weg durch die Anlage kann die Membran mit einem Klebstoff besprüht und anschließend mit einem beispielsweise von einem zweiten Rollenhalter zugeführten Textil mit der Membran in einer Andrückeinrichtung, beispielsweise zwei einen Walzenspalt bildende Walzen, verbunden werden. Es ist auch möglich, dass das Textil als erstes in die Anlage läuft, das Textil mit dem Klebestoff besprüht wird und in der Anlage die Membran zugeführt wird. Auch kann die Membran oder das Textil bereits eine Klebeschicht umfassen, die in der Anlage, beispielweise durch Energiezufuhr, aktiviert wird, um Membran und Textil zu verbinden. Nach dem Verbinden kann in einer Kleberauftragseinrichtung die Klebeschicht auf die Membran und/oder das Textil einseitig oder zweiseitig aufgetragen werden und die Klebeschicht kann mit einer Abdeckfolie bedeckt werden.

Anschließend kann das noch flache Folienband durch eine Falteinrichtung laufen, in der wenigsten ein in Längsrichtung des Bands gesehener äußerer Randabschnitt des Bands in Richtung Mitte des Bands umgelegt wird, sodass die Bereiche mit Textil aufeinanderliegen.

Nach dem Fertigfalten des Faltkörpers kann dieser durch eine Schweißeinrichtung bewegt werden, in der bevorzugt mittels Ultraschallschweißens ausschließlich die beiden Textile in einem Bereich in dem sie direkt nebeneinander- respektive aufeinanderliegen, punktuell verschweißt werden. Bei der Schweißeinrichtung kann es sich insbesondere um die weiter oben beschriebene Ultraschweißanlage mit den zwei Walzen oder Rädern handeln. In der Schweißeinrichtung kann beispielsweise das erste oder zweite Rad, bevorzugt insgesamt, zu Schwingungen im Ultrasachallbereich angeregt werden, während das andere aus erstem und zweitem Rad als Amboss dient. Das erste und das zweite Rad können aus Metall bestehen, beispielsweise aus einem Stahl.

Nach dem Verschweißen kann der Faltkörper aufgerollt und mittels einer Schneidevorrichtung abgelängt werden. Zum Beispiel kann die Länge des Folienbands in Form des Faltkörpers auf einer Rolle zumindest 20m bzw. zumindest 25m bzw. zumindest 30m oder jede beliebige Länge betragen.

Anschließend können die fertigen Folienbandrollen verpackt und in einem Lager abgelegt oder zum Versand vorbereitet werden.

Jedes Merkmal, das im ersten Aspekt oder im zweiten Aspekt beschrieben wurde, kann - mutatis mutandis - auch im jeweils anderen Aspekt Verwendung finden und das Verfahren oder den Gegenstand vorteilhaft weiterbilden, wenn dies sinnvoll ist.

Im Folgenden wird die Erfindung anhand von Figuren näher erläutert. Die Figuren zeigen lediglich bevorzugte Varianten der Erfindung, schränken die Erfindung aber nicht auf das dargestellte Ausführungsbeispiel ein. Erfindungswesentliche Merkmale, die nur den Figuren entnommen werden können, gehören zum Umfang der Offenbarung und können das Verfahren nach Anspruch 1 oder den Gegenstand nach Anspruch 10 vorteilhaft weiterbilden.

Die Figuren zeigen im Einzelnen:
- Figur 1: beispielhafte Ausführungsform eines Folienbands vor dem Falten und Verschweißen.
- Figur 2: Folienband als Faltkörper mit Verschweißung, Ausschnitt.
- Figur 3: Faltkörper von oben, mit nebenstehender Faltskizze.
- Figur 4: Fugenabdichtung mit einem Folienband in einer ersten und einer zweiten Bauphase.
- Figur 5: schematische Darstellung einer Schweißeinrichtung zum Herstellen der Schweißverbindungen des Faltkörpers.
- Figur 6: Detailansicht einer Walze zum Verschweißen.

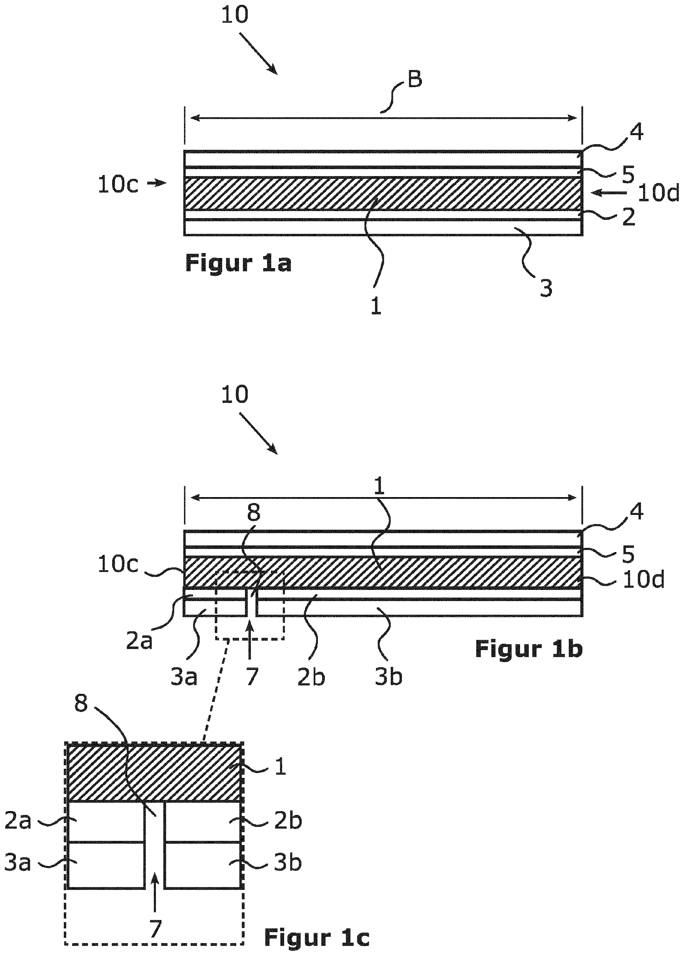

In der Figur 1a ist der grundsätzliche Aufbau eines Folienbandes 10 nach dem Zusammenfügen zahlreicher Bandlagen und vor der anschließenden Faltung und Verschweißung dargestellt. Dargestellt ist eine Schnittansicht quer zur Längsachse des Folienbands 10.

Das Folienband 10 umfasst eine Membran oder Funktionsmembran 1, eine Selbstklebeschicht 2, die mit einer abziehbaren Abdeckfolie 3 gegen Verschmutzung und Beschädigung geschützt ist, und ein Textil 4, das mittels eines Klebers 5 mit der Membran 1 auf der der Selbstklebeschicht 2 abgewandten Seite der Membran 1 bevorzugt unlösbar verbunden ist.

Im vorliegenden Ausführungsbeispiel ist das Textil vorzugsweise ein Vlies. Das Textil 4 kann ein Nadelvlies, ein Wasserstrahlvlies, ein Sinnvlies oder ein geschlossenes Vlies aus bevorzugt Polyethylen, Polyester, Polypropylen oder Polyamid sein.

Die Bandbreite B von der Anmelderin hergestellten Prototypen beträgt 75 mm, 80 mm oder 250 mm. Diese Prototypen bilden somit drei Ausführungsbeispiele mit gleichem Aufbau aber unterschiedlicher Breite B. Das Folienband 10 kann jedoch auch mit einer anderen Breite ausgebildet sein, welche benötigt wird, um einen Spalt zwischen zwei Bauelementen abzudichten. Es ist daher zweckmäßig eine Breite B von zumindest 50 mm, insbesondere zumindest 75 mm vorzusehen.

Wie später noch ausführlich beschrieben wird, wird wenigstens eine Längsseite des Folienbands 10 gefaltet. Es ergibt sich hierdurch ein Basisabschnitt 6 und ein gefalteter Abschnitt 12, wobei der Basisabschnitt breiter als der gefaltete Abschnitt ist. Dabei kann die Breite des gefalteten Abschnitts unterschiedlich groß sein, beispielsweise bei dem Ausführungsbeispiel mit der Bandbreite B von 75 mm ist der gefaltete Abschnitt 12 mm breit, bei dem Ausführungsbeispiel mit der Bandbreite B von 80 mm ist der gefaltete Abschnitt 12 mm oder 20 mm breit, und bei dem Ausführungsbeispiel mit einer Bandbreite B von 250 mm ist der gefaltete Abschnitt 12 mm oder 20 mm. Es ist hat sich gezeigt, dass die Breite des gefalteten Abschnitts vorzugsweise zumindest 10 mm breit ist, um eine ausreichend große Haftung an einem zweiten abzudichtenden Bauteil zu erzielen.

Das in Figur 1b) gezeigte Folienband 10 weist den in Figur 1a) gezeigten Aufbau auf, mit dem Unterschied, dass das Folienband für eine Faltung vorbereitet ist. die Abdeckfolie 3 in zwei Bereiche 3a, 3b unterteilt ist, einzeln von der Klebeschicht 2 gelöst werden können. Im Ausführungsbeispiel ist die Abdeckfolie 3 zum Herstellen der Bereiche 3a, 3b perforiert, mit einer Perforationslinie 7, die das bereichsweise Abnehmen der Bereiche 3a, 3b der Abdeckfolie 3 ermöglicht.

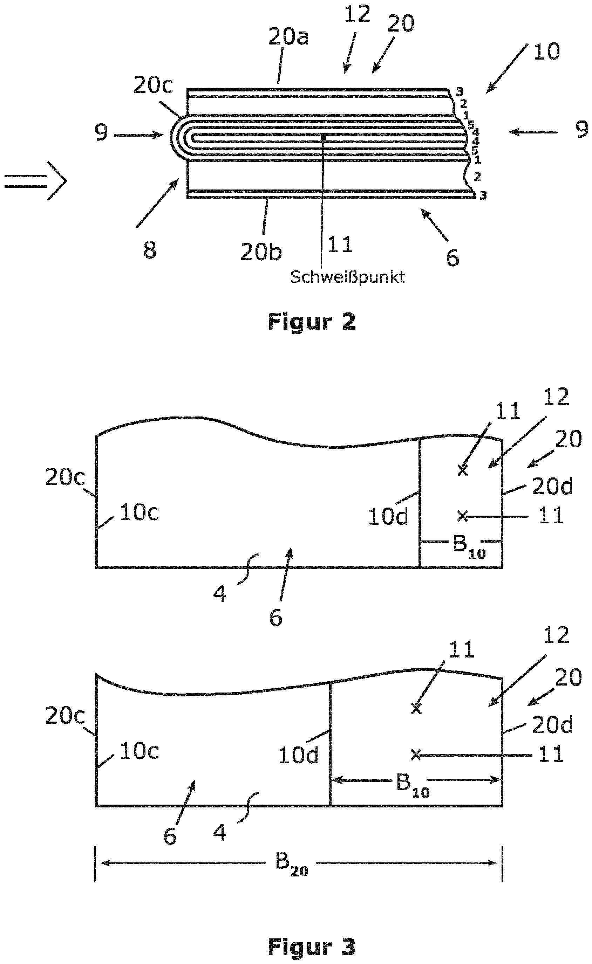

Die Klebeschicht 2 aus zwei separaten Klebebereichen 2a, 2b ausgebildet, die voneinander beabstandet sind, sodass ein klebstofffreier Bereich 8 gebildet wird. Das Trennen der Klebeschicht 2 in die zwei Klebebereiche 2a, 2b ermöglicht ein einfaches Falten des Folienbands 10 zu einem Faltkörper 20 (siehe Figur 2). Beim Falten reißt die Abdeckfolie 3 entlang der Perforationslinie 7 in zwei Abschnitte, so dass die Bereiche 3a, 3b jeweils einen separaten Abschnitt bilden.

Die Klebeschicht 2 und/oder die Abdeckfolie 3 können auch erst nach dem Falten aufgebracht werden.

Es ist insbesondere vorteilhaft, wenn auf dem Klebebereich 2a keine Abdeckfolie aufgetragen wird, da dann beim Aufrollen des gefalteten Folienbandes 10 auf einer Rolle der Bereich 2a der Klebeschicht 2 an dem Bereich 3b der Abdeckfolie 3 der benachbarten Umwicklung des Folienbandes 10 anliegt und an dieser haftet.

Die Faltung des Folienbands 10 erfolgt bevorzugt in einem Bereich, in dem keine Klebeschicht 2 mit der Membran 1 verbunden ist, was den Vorteil hat, dass seitlich am gefalteten Folienband 10 keine Klebeschicht 2 vorhanden ist.

Das gefaltete Folienband (Figur 2) weist eine Faltung bzw. einen Falz 9 eines Faltkörpers 20 auf, der aus einem Folienband 10 gebildet ist. Im Bereich der Faltung 9 ist eine Außenfläche 20c des Faltkörpers 20 frei von Klebstoff.

Das Folienband 10 weist die Klebeschicht 2 nur auf einer Seite der Membran 1 auf. Das Folienband 10 ist so gefaltet, dass die Klebeschicht 2 respektive die Abdeckfolie 3 außen am Faltkörper 20 an einer Oberseite 20a und einer Unterseite 20b liegt und das Textil 4 im Inneren des Faltkörpers 20 eine Doppelschicht bildet.

Durch Energiezufuhr werden die Aufeinanderliegenden Abschnitte des Textils 4 zumindest angeschmolzen und nach einem Abkühlen in Schweißpunkten 11 miteinander verbunden, wie es unten noch näher erläutert wird. Die Verbindung in den Schweißpunkten 11 ist fest genug, dass sich der Faltkörper 20 nicht ungewollt auffalten kann. Die Verbindung des Textil 4 im Schweißpunkt 11 kann jedoch von Hand oder mit einem Werkzeug leicht gelöst werden.

Die Figur 3 zeigt in Draufsichten zwei Faltkörper 20, die sich durch Falten der Folienbänder 10 der Figur 1 ergeben können. Die Faltkörper 20 unterscheiden sich durch die Breite B10 des gefalteten Abschnitts 12. In der oberen Darstellung ist B10 beispielsweise 12 mm, in der unteren Darstellung beträgt B10 20 mm. Grundsätzlich kann B10 auch ein beliebiges anderes Maß haben, das der Fachmann bestimmen kann. Die Basisabschnitte 6 der beiden Faltkörper in der Figur 3 haben eine einheitliche Breite B20.

Die Basisabschnitte 6 der Faltkörper 20 haben einen äußeren freien Rand 20c, der identisch mit dem äußeren Rand 10c des Folienbands 10 ist, und bilden mit der Faltung 9 einen äußeren Rand 20d. Der gefaltete Abschnitt 10 weist einen freien Rand auf, der mit dem äußeren Rand 10d des Folienbands 10 zusammen fällt.

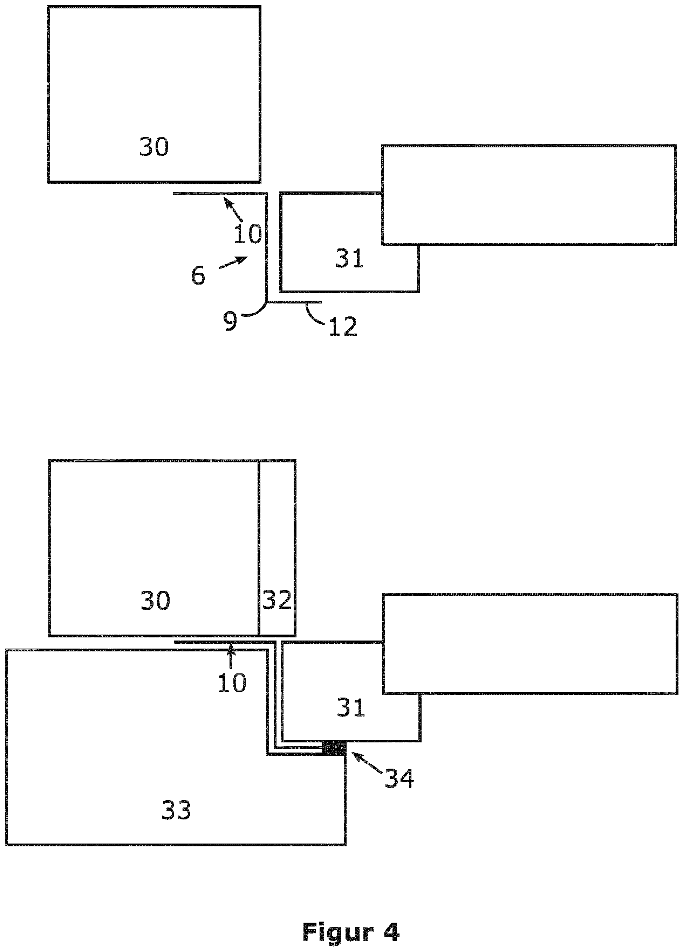

Die Figur 4 zeigt die Einbausituation des Folienbandes 10 zwischen einem ersten Baukörper 30, beispielsweise einer Öffnung in der Außenwand eines Gebäudes, und einem zweiten Baukörper 31, zum Beispiel einer Fenster- oder Türzarge, in einer ersten Bauphase (obere Skizze) und einer zweiten Bauphase (untere Skizze).

In der ersten Bauphase funktioniert das Folienband 10 als äußere Abdichtung der zwischen dem ersten Baukörper 30 und dem zweiten Baukörper 31 ausgebildeten Fuge und wirkt so, dass das Innere des Bauwerks oder Hauses austrocknen kann. Das gleiche Folienband 10 stellt während und nach der zweiten Bauphase (untere Skizze) eine innere Abdichtung der Fuge, die zwischen dem ersten Baukörper 30 und dem zweiten Baukörper 31 besteht, sicher. In der zweiten Bauphase kann zum Beispiel ein Wärmedämmverbundsystem 33 mit eigener Dichtung 34 mit dem ersten Baukörper 30 und dem zweiten Baukörper 31 verbunden werden und das erste Bauelement 30 kann eine Putzschicht 32 erhalten.

Das Folienband 10 kann bei der Montage mit seinem Falz 9 bündig zu einer Kante 35 des Baukörpers 31 angelegt und mit dem ersten und zweiten Baukörper 30, 31 verbunden werden. Der gefaltete Abschnitt 12 des Folienbandes 10 wird dann vom Basisabschnitt 6 gelöst und um die Kante 35 gelegt und mit einer weiteren Seite des zweiten Baukörpers 31 verbunden. Hierdurch ist die Montage des Folienbandes 10 sehr einfach und selbst bei einer in Draufsicht bestehenden Zickzack-Anordnung des selbstklebenden Folienbandes 10 ist die Montage einfach,

Im obigen Ausführungsbeispiel weist das Folienband lediglich einen gefalteten Abschnitt 12 auf. Im Rahmen der Erfindung kann das Folienband auch mit zwei gefalteten Abschnitten 12 an beiden Längsseiten ausgebildet sein.

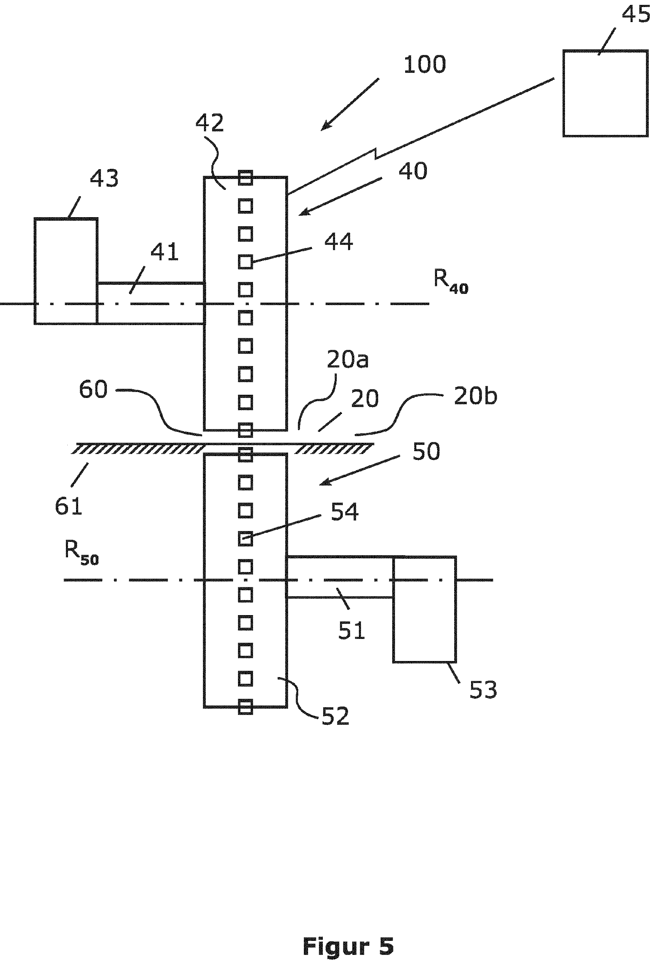

In der Figur 5 ist skizzenhaft ein Beispiel einer Schweißvorrichtung 100 gezeigt, mit der das Textil 4 der gefalteten Klebefolie 10 wie vorbeschrieben verschweißt werden kann. Die Schweißvorrichtung 100 umfasst ein erstes Rad oder eine ersten Walze 40 und ein zweites Rad oder eine zweite Walze 50.

Die erste Walze 40 kann einen kreisrunden Umfang haben und ist bevorzugt vollständig aus Metall, beispielweise aus Stahl, Titan oder Aluminium gebildet. Die erste Walze 40 umfasst eine Antriebsachse 41, die drehfest mit der ersten Walze 40 verbunden ist. Im Ausführungsbeispiel wird die erste Walze 40 von einem ersten Elektromotor 43 angetrieben. Die Oberfläche 42 der ersten Walze 40 ist mit einer Energiequelle 45, beispielsweise einem Ultraschallgenerator, welcher die erste Walze mit Ultraschall beaufschlagt, oder einem Wechselstromgenerator, verbunden, der die Oberfläche 42 mit einer elektrischen Spannung beaufschlagen kann. Ist die Energiequelle 45 ein Ultraschallgenerator, dann ist die erste Walze 40 vorzugsweise als Sonotrode ausgebildet, d.h., dass sie durch Einleiten der Ultraschallwellen in Resonanzschwingungen versetzt wird.

Die Oberfläche 42 der ersten Walze 40 kann im Wesentlichen glatt sein oder, wie im Ausführungsbeispiel dargestellt, radial vorstehende Noppen aufweisen, die gleichmäßig über den Außenumfang der ersten Walze 40 verteilt angeordnet sind. Derartige Noppen sind insbesondere bei Verwendung von Ultraschall von Vorteil. Bei Verwendung von elektromagnetischen Wellen sind an den Orten der Noppen Elektroden vorgesehen, welche bündig mit der Oberfläche der Walze 40 abschließen können oder ähnlich wie die Noppen an der Oberfläche vorstehen. Die Elektroden sind gegenüber der übrigen Mantelfläche der Walzen elektrisch isoliert.

Die zweite Walze 50 hat einen kreisrunden Umfang und kann wie die erste Walze aus Stahl oder einem anderen Metall gebildet sein, oder solch ein Metall umfassen. Die zweite Walze 50 umfasst eine Antriebswelle 51, die drehfest mit der zweiten Walze 50 verbunden ist. Im Ausführungsbeispiel wird die zweite Walze 50 von einem zweiten Elektromotor 53 angetrieben. Die Oberfläche 52 der zweiten Walze 50 weist eine Vielzahl von Noppen 54 auf, die in radialer Richtung von der Oberfläche 52 der zweiten Walze nach außen vorstehen.

Die erste Walze 40 und die zweite Walze 50 sind nebeneinander und mit ihren Drehachsen R40 und R50 parallel zueinander angeordnet. Die erste Walze 40 und die zweite Walze 50 bilden gemeinsam einen Walzenspalt 60. Der Walzenspalt 60 ist unmittelbar oberhalb einer Auflagefläche 61 für das gefaltete Folienband 10 angeordnet, was bedeutet, dass eine der Walzen aus erster Walze 40 und zweiter Walze 50 zu einem großen Teil oder im Wesentlichen vollständig unterhalb der Auflagefläche 61 angeordnet ist.

Die Schweißpunkte 11 in dem gefalteten Folienband 10 bzw. Faltkörper 20 werden dort gebildet, wo der durch den Walzenspalt 60 laufende Faltkörper 20 an seiner Oberseite 20a von der ersten Walze 40 oder einem Noppen 44 der ersten Walze nach unten in Richtung der zweiten Walze 50 und gleichzeitig an der Unterseite 20b von einem Noppen 54 der zweiten Walze 50 nach oben gegen die erste Walze 40 gedrückt wird.

Dabei kann bei der bevorzugten Ultraschallverschweißung die zweite Walze 50 den Amboss 50 bilden und die erste Walze 40 die Sonotrode 40, die insgesamt in Schwingungen im Ultraschallbereich versetzt wird. Die durch die Sonotrode 40 erzeugte Reibung schmilzt das Textil 4 im Bereich der von der Membran 1 abgewandten Oberseiten zumindest an, sodass nach der Abkühlung, die sich zugewandten Seiten der nebeneinander liegenden Textile 4 aneinander heften. Dabei bestimmt die Anzahl und Anordnung der Noppen 54 auf der zweiten Walze 50 oder dem Amboss 50 die Anordnung und Anzahl der Schweißpunkte 11 in dem Faltkörper 20, wenn die erste Walze 40 eine glatte Oberfläche hat.

Wenn die erste Walze 40 Noppen 44 und die zweite Walze 50 Noppen 54 hat, und ein Außendurchmesser, gemessen an den radial äußeren Enden der Noppen 44, 54 der beiden Walzen 40, 50 identisch ist, kann die Anzahl und Anordnung der Noppen 44 auf der ersten Walze 40 der Anzahl und der Noppen 54 auf der zweiten Walze 50 entsprechen. Um sicher eine regelmäßige sichere Herstellung der Schweißpunkte 11 in dem Faltkörper 20 zu ermöglichen, müssen die Rotationen der beiden Walzen 40, 50 synchronisieret werden. Im Ausführungsbeispiel erfolgt die Synchronisation über die Elektromotoren 43 und 53.

Auch für die Schweißvorrichtung 100 der Figur 5 gilt, dass hier nur ein Beispiel beschrieben wurde und der Fachmann zahlreiche Alternativen kennt, die die nämliche Wirkung haben. Die Erfindung ist bezüglich der Schweißvorrichtung 100 nicht auf die gezeigte und beschriebene Schweißvorrichtung 100 beschränkt.

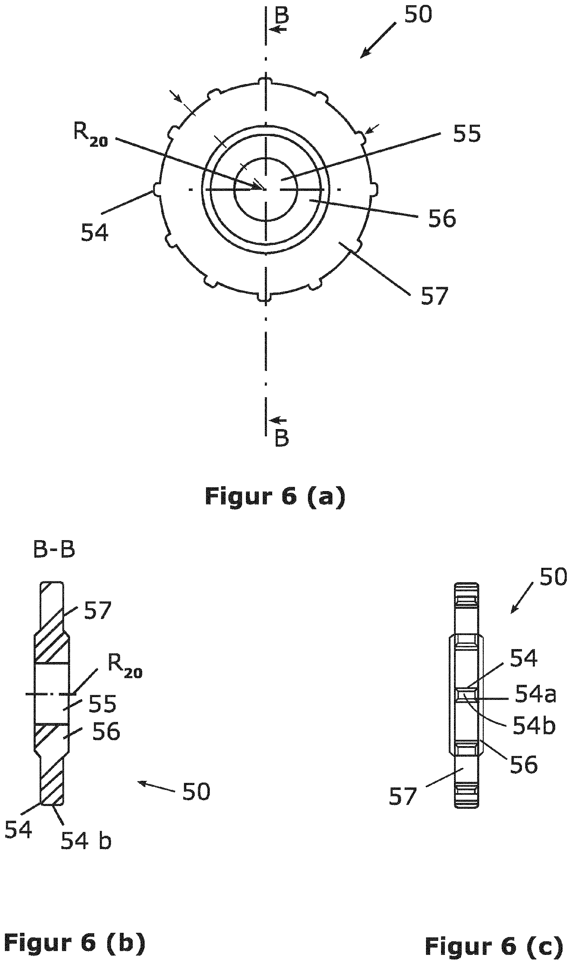

Die Figur 6 zeigt ein detaillierte Darstellung der zweiten Walze 50, das Ambossrad, in vier Ansichten. Die erste Ansicht a) zeigt eine seitliche Draufsicht auf die zweite Walze 50. Das Ambossrad umfasst eine zentrale Öffnung 55, die mit der Antriebsachse 51 verbunden werden kann, die von dem Motor 54 angetrieben wird. An die zentrale Öffnung 55 schließt sich in radiale Richtung ein ringförmiger Walzengrundkörper 56 an. Der Walzengrundkörper 56 trägt den Walzenkopf 57 mit den radial nach außen vorstehenden Noppen 54 oder Prägenoppen.

Die Abbildung b) zeigt einen Mittelquerschnitt B-B durch das Ambossrad respektive die zweite Walze 50 der Abbildung a) in einer Ebene, die durch die Rotationsachse R50 des Ambossrads mit aufgespannt wird. Gezeigt sind die Rotationsachse R50, die Öffnung 55 für die Aufnahme einer nicht gezeigten Achse, die das Ambossrad antreiben kann, der Walzengrundkörper 56 und der Walzenkopf 57. Das gezeigte Ambossrad ist in einem Stück urgeformt, das heißt, gegossen, gesintert oder aus einem Vollmaterial spanabhebend herausgearbeitet worden. Das Material der zweiten Walze 50 ist ein Metall, beispielsweise ein Stahl.

Die Abbildung c) zeigt eine Seitensicht der zweiten Walze 50. Wie man erkennen kann, sind die vom Walzenkopf 57 abgewandten Enden der Noppen 54, in deren Bereich die zweite Walze 50, wie in der Abbildung a) im Schnitt B-B zu sehen ist, einen maximalen

Durchmesser aufweist, viereckig mit rundum schräg nach außen verlaufenden Kanten 54a. Das heißt, die Fläche 54b, die während der Verschweißung punktuell gegen den Faltkörper 20 drückt, und die mit der Sonotrode 40 zusammenwirkt, ist so geformt, dass eine optimale Kraftübertragung erfolgen kann.

### Bezugszeichenliste

| | | | |
|---|---|---|---|
| 1 | Membran, Funktionsmembran | 10b | Unterseite |
| 2 | Klebeschicht | 10c | äußerer Rand |
| 2a | Klebebereich | 10d | äußerer Rand |
| 2b | Klebebereich | 11 | Schweißpunkt |
| 2c | Klebebereich | 12 | gefalteter Abschnitt |
| 3 | Abdeckfolie | 20 | Faltkörper |
| 3a | Abdeckfolienbereich | 20a | Oberseite |
| 3b | Abdeckfolienbereich | 20b | Unterseite |
| 3c | Abdeckfolienbereich | 20c | Falz |
| 4 | Textil | 20d | äußerer Rand |
| 5 | Kleber | 40 | Walze |
| 6 | Basisabschnitt | 41 | Antriebsachse |
| 7 | Perforationslinie | 42 | Oberfläche |
| 8 | klebstofffreier Bereich | 43 | Motor |
| 9 | Faltung | 44 | Noppe |
| 10 | Folienband | 45 | Energiequelle |
| 10a | Oberseite | 50 | Walze |

## Patentansprüche

1. Verfahren zur Herstellung eines Folienbands (10) zur Abdichtung von Fugen zwischen zwei Bauelementen (30, 31), zum Beispiel im Hausbau zwischen einem Mauerwerk und einer Fenster- oder einer Türzarge, mit den Schritten:
a) Bereitstellen einer bandförmigen Membran (1) oder Zuschneiden einer solchen Membran (1);
b) Bereitstellen eines bandförmigen Textils (4) oder Zuschneiden eines solchen Textils (4);
c) Verbinden des Textils (4) mit der Ober- und/oder Unterseite der Membran (1);
d) zumindest bereichsweises Auftragen einer Klebeschicht (2) auf die vom Textil abgewandten Seite der Membran (1);
e) Falten des Folienbands (10) entlang einer Längsachse zu einem Faltkörper (20), sodass die Klebeschicht (2) bereichsweise eine Außenseite des Faltkörpers (20) an einer Oberseite (20a) und/oder einer Unterseite (20b) bildet, und im Inneren des Faltkörpers (20) zumindest bereichsweise Abschnitte des Textils (4) aufeinanderliegen;
f) bereichsweises Verbinden der aufeinanderliegenden Abschnitte des Textils (4), so dass die aufeinanderliegenden Abschnitte des Textils (4) partiell und insbesondere punktuell verbunden sind.

2. Verfahren nach Anspruch 1,
wobei das Verbinden der aufeinanderliegenden Abschnitte des Textils (4) durch bereichsweises Zuführen von Energie zu dem Faltkörper (20) erfolgt, sodass die aufeinanderliegenden Abschnitte des Textils (4) partiell und insbesondere punktuell verschweißen.

3. Verfahren nach Anspruch 2,
wobei zur Energiezufuhr der Faltkörper (20) durch einen Walzenspalt (61), den zwei parallel zueinander rotierende Walzen (40, 50) bilden, geführt wird,
wobei eine erste Walze (50) eine Vielzahl an, in die Walzenoberfläche (52) integrierte oder an der Walzenoberfläche (52) vorstehende, Noppen (54) aufweist, welche jeweils einen punktförmigen Anregungskörper bilden, um punktförmig Energie zum Verschweißen in das Folienband einzubringen.

4. Verfahren nach Anspruch 3,
wobei die Anregungskörper Ultraschallsender sind, sodass mittels Ultraschall die aufeinanderliegenden Abschnitte des Textils (4) punktuell verschweißt werden.

5. Verfahren nach Anspruch 3,
wobei die Anregungskörper punktförmige Elektroden sind, welche mit einer Quelle für ein elektrisches Schweißsignal verbunden sind, welches ein Gleichstrom, Wechselstrom und insbesondere ein Hochfrequenzsignal sein kann, und die andere Walze elektrisch leitend ausgebildet ist und somit eine Gegenelektrode bildet.

6. Verfahren nach einem der Ansprüche 2 bis 5,
wobei das punktuelle Verschweißen bevorzugt durch Ultraschallschweißen (US) oder Hochfrequenzschweißen (RF) oder ein anderes geeignetes Schweißverfahren erfolgt.

7. Verfahren nach Anspruch 5 oder 6,
wobei zum Erzeugen, der die zwei Textilschichten (4) verbindenden Schweißpunkte (11), eine an der Elektrode (40) anliegende Spannung und/oder eine Drehgeschwindigkeit wenigstens einer der beiden Walzen (40, 50) veränderbar ist.

8. Verfahren nach einem der Ansprüche 1 bis 7,
wobei das Folienband (10) respektive der Faltkörper (20) nach dem Verschweißen in einem weiteren Schritt zu einer Rolle aufgerollt wird, die leicht gelagert und transportiert werden kann.

9. Verfahren nach einem der Ansprüche 1 bis 8,
wobei die Klebeschicht (2) zumindest bereichsweise mit einer Abdeckfolie (3) abgedeckt wird, um einer Austrocknung oder Verschmutzung der Klebeschicht (2) bei der Lagerung vorzubeugen und/oder ein ungewolltes Kleben des Folienbands (10) respektive des Faltkörpers (20) an einem Gegenstand zu verhindern und/oder das Abrollen des Faltkörpers (20) von der Rolle zu erleichtern.

10. Verfahren nach einem der Ansprüche 1 bis 9,
wobei als Textil ein Vlies verwendet wird.

11. Folienband (10) zum Abdichten von Fugen zwischen zwei Bauelementen (30, 31), zum Beispiel im Hausbau zwischen einem Mauerwerk und einer Fenster- oder einer Türzarge, das Folienband (10) umfasst:
a) eine Funktionsmembran (1) mit einer Oberseite und einer Unterseite,
b) ein Textil (4), das mit der Funktionsmembran (1) an einer Oberseite oder Unterseite bevorzugt vollflächig verbunden ist,
c) zumindest bereichsweise eine Klebeschicht (2), die auf die vom Textil (4) abgewandte Seite der Membran (1) zumindest bereichsweise aufgebracht ist,
**dadurch gekennzeichnet,**
**dass** das Folienband (10) zu einem Faltkörper (20) gefaltet ist, sodass im Inneren des Faltkörpers (20) zumindest bereichsweise Abschnitte des Textils (4) aufeinanderliegen, wobei die aufeinanderliegenden Abschnitte des Textils (4) partiell und insbesondere punktuell miteinander verschweißt sind.

12. Folienband (10) nach Anspruch 11,
wobei das Schweißverfahren zum Verschweißen des Textils (4) Ultraschallschweißen oder Hochfrequenzschweißen ist.

13. Folienband (10) nach einem der Ansprüche 11 oder 12,
wobei die bereichsweise Klebeschicht (2) nicht im Bereich einer Faltung (9) gebildet ist, sodass an Längsseiten (20c, 20d) des Faltkörpers (20) kein Klebstoff aufgetragen ist.

14. Folienband (10) nach einem der Ansprüche 11 bis 13,
wobei die Membran (1) aus Polyurethan (PUR), Polyamid (PA), Polyethylen (PE), Polypropylen (PP) oder PVC gebildet ist.

15. Folienband (10) nach einem der Ansprüche 11 bis 14,
wobei das Textil (4) ein Nadelvlies, ein Wasserstrahlvlies, ein Sinnvlies oder ein geschlossenes Vlies aus bevorzugt Polyethylen, Polyester, Polypropylen oder Polyamid ist.

16. Folienband (10) nach einem der Ansprüche 11 bis 15,
wobei die Klebeschicht (2) zumindest in einem, eine Unterseite (20b) des Faltkörpers (20) bildenden, Abschnitt mit einer Abdeckfolie (3) abgedeckt ist.

17. Folienband (10) nach einem der Ansprüche 11 bis 16,
wobei das Folienband (10) mit dem Verfahren nach einem der Ansprüche 1 bis 10 hergestellt ist.

## Claims

1. A method for producing a film strip (10) for sealing joints between two structural elements (30, 31), for example in house construction between a masonry and a window frame or door frame, comprising the steps:
a) providing a ribbon-shaped membrane (1) or cutting such a membrane (1) to size;
b) providing a ribbon-shaped textile (4) or cutting such a textile (4) to size;
c) connecting the textile (4) to the upper and/or lower side of the membrane (1);
d) applying, at least in some areas, an adhesive layer (2) to the side of the membrane (1) facing away from the textile;
e) folding the film strip (10) along a longitudinal axis to form a folding body (20), so that the adhesive layer (2) forms in some areas an outer side of the folding body (20) on an upper side (20a) and/or a lower side (20b), and in the interior of the folding body (20) portions of the textile (4) are superimposed at least in some areas;
f) connecting the superimposed portions of the textile (4) in some areas, so that the superimposed portions of the textile (4) are partially and in particular punctually connected.

2. The method according to claim 1,
wherein the connecting of the superimposed portions of the textile (4) is achieved by supplying energy to the folding body (20) in some areas, so that the superimposed portions of the textile (4) are partially and in particular punctually welded.

3. The method according to claim 2,
wherein, for supplying energy, the folded body (20) is guided through a nip (61) formed by two rollers (40, 50) rotating parallel to each other,
wherein a first roller (50) has a plurality of knobs (54) integrated into the roller surface (52) or projecting from the roller surface (52), which knobs each form a point-like excitation body for introducing energy for welding into the film strip in a point-like manner.

4. The method according to claim 3,
wherein the excitation bodies are ultrasonic transmitters so that ultrasound is used to punctually weld the superimposed portions of the textile (4).

5. The method according to claim 3,
wherein the excitation bodies are point-like electrodes, which are connected to a source of an electrical welding signal, which can be direct current, alternating current and in particular a high-frequency signal, and the other roller is designed to be electrically conductive and thus forms a counter-electrode.

6. The method according to any one of claims 2 to 5,
wherein the punctual welding is performed preferably by ultrasonic welding (US) or high-frequency welding (RF) or another suitable welding process.

7. The method according to claim 5 or 6,
wherein, in order to produce the spot welds (11) connecting the two textile layers (4), a voltage applied to the electrode (40) and/or a rotational speed of at least one of the two rollers (40, 50) can be varied.

8. The method according to any one of claims 1 to 7,
wherein the film strip (10) or the folded body (20), after welding and in a further step, is rolled up into a roll which can be easily stored and transported.

9. The method according to any one of claims 1 to 8,
wherein the adhesive layer (2) is covered, at least in some areas, with a cover foil (3) in order to prevent drying out or soiling of the adhesive layer (2) during storage and/or to prevent unintentional adhesion of the film strip (10) or the folded body (20) to an object and/or to facilitate unrolling of the folded body (20) from the roll.

10. The method according to any one of claims 1 to 9,
wherein a non-woven fabric is used as the textile.

11. A film strip (10) for sealing joints between two construction elements (30, 31), for example in house construction between a masonry and a window frame or door frame, the film strip (10) comprising:
a) a functional membrane (1) having an upper side and a lower side,
b) a textile (4) which is connected to the functional membrane (1) on an upper side or lower side, preferably over the entire surface thereof,
c) at least in some areas, an adhesive layer (2) applied to the side of the membrane (1) facing away from the textile (4) at least in some areas,
**characterized in that**
the film strip (10) is folded to form a folding body (20), so that in the interior of the folding body (20), at least in some areas, portions of the textile (4) are superimposed, the superimposed portions of the textile (4) being partially and, in particular, punctually welded to one another.

12. The film strip (10) according to claim 11,
wherein the welding method for welding the textile (4) is ultrasonic welding or high-frequency welding.

13. The film strip (10) according to any one of claims 11 or 12,
wherein the adhesive layer (2) present in some areas is not formed in the area of a fold (9), so that no adhesive is applied to longitudinal sides (20c, 20d) of the folded body (20).

14. The film strip (10) according to any one of claims 11 to 13,
wherein the membrane (1) is formed from polyurethane (PUR), polyamide (PA), polyethylene (PE), polypropylene (PP) or PVC.

15. The film strip (10) according to any one of claims 11 to 14,
wherein the textile (4) is a needle-punched nonwoven, a water-jet nonwoven, a spunbonded nonwoven or a closed nonwoven preferably made of polyethylene, polyester, polypropylene or polyamide.

16. The film strip (10) according to any one of claims 11 to 15,
wherein the adhesive layer (2) is covered with a cover foil (3) at least in a portion forming a lower side (20b) of the folded body (20).

17. The film strip (10) according to any one of claims 11 to 16,
wherein the film strip (10) is produced by the method according to any one of claims 1 to 10.

## Revendications

1. Procédé de fabrication d'une bande de feuille (10) destinée à étanchéifier des joints entre deux éléments de construction (30, 31), par exemple dans le bâtiment entre un ouvrage de maçonnerie et un châssis de fenêtre ou un chambranle de porte, comprenant les étapes :
a) mise à disposition d'une membrane (1) en forme de bande ou découpe d'une telle membrane (1) ;
b) mise à disposition d'un textile (4) en forme de bande ou découpe d'un tel textile (4) ;
c) liaison du textile (4) avec le côté supérieur et/ou inférieur de la membrane (1) ;
d) application, du moins par zones, d'une couche adhésive (2) sur le côté de la membrane (1) opposé au textile ;
e) pliage de la bande de feuille (10) le long d'un axe longitudinal en un corps plié (20) de telle sorte que la couche adhésive (2) forme, par zones, un côté extérieur du corps plié (20) au niveau d'un côté supérieur (20a) et/ou d'un côté inférieur (20b), et que des sections du textile (4) soient superposées, du moins par zones, dans l'intérieur du corps plié (20) ;
f) liaison, par zones, des sections superposées du textile (4) de telle sorte que les sections superposées du textile (4) soient reliées partiellement et en particulier ponctuellement.

2. Procédé selon la revendication 1,
sachant que la liaison des sections superposées du textile (4) s'effectue par amenée, par zones, d'énergie au corps plié (20) afin que les sections superposées du textile (4) se soudent partiellement et en particulier ponctuellement.

3. Procédé selon la revendication 2,
sachant que pour l'amenée d'énergie, le corps plié (20) est mené par un entrefer (61) que forment deux cylindres (40, 50) qui tournent parallèlement l'un à l'autre,
sachant qu'un premier cylindre (50) présente une pluralité de picots (54) intégrés dans la surface de cylindre (52) ou faisant saillie au niveau de la surface de cylindre (52), lesquels forment respectivement un corps d'excitation en forme de point pour apporter de l'énergie en forme de point dans la bande de feuille pour le soudage.

4. Procédé selon la revendication 3,
sachant que les corps d'excitation sont des émetteurs d'ultrasons de telle sorte que les sections superposées du textile (4) soient soudées ponctuellement par ultrasons.

5. Procédé selon la revendication 3,
sachant que les corps d'excitation sont des électrodes en forme de point, lesquelles sont reliées à une source pour un signal de soudage électrique, lequel peut être un courant continu, un courant alternatif et en particulier un signal à haute fréquence, et l'autre cylindre est constitué de manière électriquement conductrice et forme ainsi une contre-électrode.

6. Procédé selon l'une des revendications 2 à 5,
sachant que le soudage ponctuel s'effectue de préférence par soudage à ultrasons (US) ou soudage à haute fréquence (RF) ou un autre procédé de soudage approprié.

7. Procédé selon la revendication 5 ou 6,
sachant que pour la génération des points de soudage (11) reliant les deux couches de textile (4), une tension présente au niveau de l'électrode (40) et/ou une vitesse de rotation d'au moins un des deux cylindres (40, 50) est variable.

8. Procédé selon l'une des revendications 1 à 7,
sachant que la bande de feuille (10) ou le corps plié (20) est roulé après le soudage, lors d'une étape supplémentaire, en un rouleau qui peut être facilement stocké et transporté.

9. Procédé selon l'une des revendications 1 à 8,
sachant que la couche adhésive (2) est recouverte, du moins par zones, par une feuille de recouvrement (3) pour prévenir un assèchement ou un encrassement de la couche adhésive (2) lors du stockage et/ou empêcher un collage non souhaité de la bande de feuille (10) ou du corps plié (20) sur un objet et/ou faciliter le dévidage du corps plié (20) à partir du rouleau.

10. Procédé selon l'une des revendications 1 à 9,
sachant qu'un voile est utilisé comme textile.

11. Bande de feuille (10) destinée à étanchéifier des joints entre deux éléments de construction (30, 31), par exemple dans le bâtiment entre un ouvrage de maçonnerie et un châssis de fenêtre ou un chambranle de porte, la bande de feuille (10) comprenant :
a) une membrane fonctionnelle (1) présentant un côté supérieur et un côté inférieur,
b) un textile (4) qui est relié, de préférence sur toute la surface, à la membrane fonctionnelle (1) au niveau d'un côté supérieur ou d'un côté inférieur,
c) du moins par zones, une couche adhésive (2) qui est apposée, du moins par zones, sur le côté de la membrane (1) opposé au textile (4),
**caractérisée en ce que**
la bande de feuille (10) est pliée en un corps plié (20) afin que des sections du textile (4) soient superposées, du moins par zones, dans l'intérieur du corps plié, sachant que les sections superposées du textile (4) sont soudées partiellement et en particulier ponctuellement les unes avec les autres.

12. Bande de feuille (10) selon la revendication 11,
sachant que le procédé de soudage pour le soudage du textile (4) est un soudage à ultrasons ou un soudage à haute fréquence.

13. Bande de feuille (10) selon l'une des revendications 11 ou 12,
sachant que la couche adhésive (2) par zones n'est pas formée dans la zone d'un pli (9) afin qu'aucune colle ne soit appliquée au niveau de côtés longitudinaux (20c, 20d) du corps plié (20).

14. Bande de feuille (10) selon l'une des revendications 11 à 13,
sachant que la membrane (1) est composée de polyuréthane (PUR), de polyamide (PA), de polyéthylène (PE), de polypropylène (PP) ou de PVC.

15. Bande de feuille (10) selon l'une des revendications 11 à 14,
sachant que le textile (4) est un voile aiguilleté, un voile à jet d'eau, un voile filé ou un voile fermé composé de préférence de polyéthylène, de polyester, de polypropylène ou de polyamide.

16. Bande de feuille (10) selon l'une des revendications 11 à 15,
sachant que la couche adhésive (2) est recouverte par une feuille de recouvrement (3), du moins dans une section formant un côté inférieur (20b) du corps plié (20).

17. Bande de feuille (10) selon l'une des revendications 11 à 16,
sachant que la bande de feuille (10) est fabriquée par le procédé selon l'une des revendications 1 à 10.
